## Europäisches Patentamt
## European Patent Office
## Office européen des brevets

(19)

(11) Veröffentlichungsnummer: **0 158 036**
**B1**

(12) # EUROPÄISCHE PATENTSCHRIFT

(45) Veröffentlichungstag der Patentschrift:
10.08.88

(51) Int. Cl.⁴: **B 07 B 1/26**

(21) Anmeldenummer: 85101469.6

(22) Anmeldetag: 12.02.85

(54) Trommelsiebmaschine.

(30) Priorität: 31.03.84 DE 3412174

(43) Veröffentlichungstag der Anmeldung:
16.10.85 Patentblatt 85/42

(45) Bekanntmachung des Hinweises auf die Patenterteilung:
10.08.88 Patentblatt 88/32

(84) Benannte Vertragsstaaten:
AT BE CH DE FR GB IT LI LU NL SE

(56) Entgegenhaltungen:
DE-C-71 706
DE-C-78 341
DE-C-80 634
US-A-1 623 356

SOVIET INVENTIONS ILLUSTRATED, Woche J/48,
19. Januar 1983, Zusammenfassung Nr. A5334,
Derwent Publications Limited; & SU - A - 899 158
(GIDROMASHUGLEOBOGAS) 23.01.82
idem
AUFBEREITUNGSTECHNIK, Band 23, Nr. 3, März
1982, Seiten 134-148, Wiesbaden, DE; E.
FELLENSIEK: "Die Siebklassierung von
Massengütern"

(73) Patentinhaber: **Hein, Lehmann Aktiengesellschaft,
Fichtenstrasse 75, D-4000 Düsseldorf 1 (DE)**

(72) Erfinder: **Hoppe, Kurt, Ing. grad., Rubensweg 8,
D-4010 Hilden (DE)**

(74) Vertreter: **Patentanwaltsbüro Cohausz & Florack,
Postfach 14 01 47, D-4000 Düsseldorf 1 (DE)**

## Beschreibung

Die Erfindung betrifft eine Siebmaschine mit einer Siebtrommel, die sich um ihre Achse dreht und ein Sieb aus elastischem Material aufweist, das abwechselnd gespannt und entspannt wird.

Der Siebbelag einer Trommelsiebmaschine setzt sich bei vielen Siebgütern nach einiger Zeit zu, so daß der Siebbelag gesäubert werden muß. Dies ist arbeitsaufwendig und führt zu unerwünschten Unterbrechungen der Siebtätigkeit. Eine Siebmaschine der eingangs genannten Art ist aus der DE-C-78 341 bekannt Bei dieser bekannten Siebmaschine wird aufgrund der erheblichen Länge des Siebes bzw. des einzigen Siebfeldes eine ausreichende Reinigung des Siebes über die gesamte Fläche nicht erreicht.

Aufgabe der Erfindung ist es, eine Trommelsiebmaschine derart zu verbessern, daß ein hoher Selbstreinigungseffekt des Siebbelages besteht.

Diese Aufgabe wird erfindungsgemäß dadurch gelöste daß die Siebtrommel zwei oder mehrere zylindrische oder kegelstumpfförmige Siebzonen aufweist, deren Länge zum abwechselnden Spannen und Entspannen des Siebbelages in Achs- bzw. Förderrichtung schwingend veränderbar ist, daß zwischen zwei Siebzonen ringförmige Befestigungsbereiche für den Siebbelag vorgesehen sind und die Befestigungsbereiche abwechselnd an nur drehenden ersten Teilen der Siebtrommel und an drehenden und gleichzeitig in Achsrichtung schwingenden zweiten Teilen der Siebtrommel befestigt sind, und daß die Befestigungsbereiche koaxiale Ringe aufweisen, von denen die sich nur drehenden ersten Ringe an der Trommelaußenseite über achsparallele erste Längsteile und die sich drehenden und schwingenden zweiten Ringe an der Trommelaußenseite über achsparallele zweite Längsteile miteinander verbunden sind.

Aufgrund des abwechselnden Spannens und Entspannens bzw. Streckens und Stauchens des elastischen Siebbelages in ringförmigen Bereichen der Siebtrommel wird ein hoher selbsttätiger Reinigungseffekt des Siebbelages während der Siebarbeit erzielt. Da nur ein geringer Teil der ringförmigen Siebzone mit Siebgut belegt ist, verbleibt ein im mittleren und oberen Bereich großer freier Teil des Siebbelages, der aufgrund des schwingenden Spannens und Entspannens ausreichend Zeit hat, sich zu reinigen. Damit entfallen Arbeitsunterbrechungen zum Reinigen des Siebbelages, und auch schwierigste Siebgüter können bearbeitet werden.

Im Verhältnis zur Größe der Siebfläche benötigt die Maschine verhältnismäßig wenig Platz, und ferner kann die Länge der Siebtrommel in Achsrichtung entsprechend dem Siebgut und der gewünschten Siebleistung beliebig lang gewählt werden. Hierbei bietet sich ein baukastenförmiger Aufbau von Siebtrommel und Siebmaschine an.

Besonders vorteilhaft ist es, wenn die Schwingungen linear, kreisförmig oder elliptisch sind.

Vorzugsweise wird vorgeschlagen, daß die an der Trommelaußenseite angeordneten zweiten Teile der Siebtrommel über Schwingungen aufnehmende Lager an den ersten Teilen befestigt sind. Besonders vorteilhaft ist es, wenn die ersten Teile der Siebtrommel zwei Laufringe oder Zahnkränze aufweisen, die von unteren Tragrollen gestützt und angetrieben werden.

Vorzugsweise wird vorgeschlagen, daß die zweiten Teile der Siebtrommel in axialer Richtung durch Nockenbahnen, Unwucht-, Exzenterantriebe und/oder elektromagnetisch schwingend angetrieben sind. Dabei können die zweiten Teile der Siebtrommel am Trommelanfang, am Trommelende oder in der Trommelmitte angetrieben sein. Eine konstruktiv einfache Bauweise wird dadurch erreicht, daß die ersten Teile von einem ersten Trommelkorb und die zweiten Teile von einem zweiten Trommelkorb gebildet sind.

Drei Ausführungsbeispiele der Erfindung sind in den Zeichnungen dargestellt und werden im folgenden näher beschrieben. Es zeigen:

Fig. 1      einen Schnitt nach A - A in Fig. 2;
Fig. 2      eine Stirnansicht der Siebmaschine;
Fig. 3      den Schnitt B - B in Fig. 1;
Fig. 4      einen senkrechten Längsschnitt durch ein zweites Ausführungsbeispiel; und
Fig. 5      einen senkrechten Längsschnitt durch ein drittes Ausführungsbeispiel.

Die Siebmaschine weist eine Siebtrommel 1 auf, deren Drehachse C - C zur Waagerechten etwas geneigt verläuft, so daß die Siebtrommel von dem Aufgabeende 1a zum Austragsende 1b abfällt. Abgesehen von dieser leichten Neigung kann aber davon gesprochen werden, daß die Siebtrommel 1 im wesentlichen waagerecht liegt.

Die Siebtrommel 1 weist erste Teile 2 auf, die sich um die Achse C - C drehen, und zweite Teile 3 auf, die sich um die Achse C - C drehen und darüber hinaus etwa parallel zur Achse C - C schwingen. Die ersten Teile 2 können auch als erster Trommelkorb, und die zweiten Teile 3 als zweiter Trommelkorb bezeichnet werden. Die ersten Teile 2 weisen zur Achse C - C parallele erste Längsträger 4 auf, die sich etwa über die gesamte Länge der Siebtrommel erstrecken und außen an der Siebtrommel in gleichen Winkelgraden gleichmäßig verteilt sind. Die Längsträger 4 sind am Aufgabeende 1a an einem zylindrischen Trommelabschnitt 6a und am Austragsende 1b an einem zylindrischen Trommelabschnitt 6b befestigt, die jeweils starr sind und außen Laufringe 7 tragen, die auf Tragrollen 8 gelagert sind. Einer der Laufringe oder auch beide können von einem Zahnkranz gebildet werden, der mit Zahnrädern bzw. Ritzeln kämmt.

Innerhalb der ersten Längsträger 4 oder auch seitlich zu diesen versetzt angeordnet sind an den ersten Längsträgern und/oder an den Trommelabschnitten 6a, 6b zweite achsparallele Längsträger 5 durch Lager 9 befestigt, die eine achsparallele Bewegung der zweiten Längsträger gegenüber den ersten Längsträgern zulassen. An den ersten Längsträgern 4 sind über radiale Abstandsstücke 10 koaxiale Ringe 11 und an den zweiten Längsträgern 5 über radiale Abstandsstücke 12 koaxiale Ringe 13 befestigt. Diese Ringe 11, 13 bilden zusammen mit nicht dargestellten Befestigungsmitteln für die Siebbeläge Befestigunsbereiche 11a, 13a. In axialer Richtung wechseln die Ringe 11 und 13 einander ab, so daß jeweils eine ringförmige Zone 14 der Trommel bzw. des Siebbelages 20 zu einer Seite an einem Ring 11 und zur anderen Seite an einem Ring 13 befestigt ist. Da die zu den ersten Teilen 2 zu rechnenden Ringe 11 der Siebtrommel sich nur um die Achse C - C drehen und die zu den zweiten Teilen 3 zählenden Ringe 13 sich nicht nur um die Achse C - C drehen, sondern zusätzlich durch die Längsträger 5 achsparallel oder im wesentlichen achsparallel schwingen, wird der ringförmige Siebbelag jeder Zone 14 achsparallel abwechselnd gestaucht und gestreckt bzw. gespannt und entspannt. Im Ausführungsbeispiel geschieht dies mit allen Siebzonen 14. Alternativ können aber auch einzelne Siebzonen nur gedreht werden und nicht schwingen

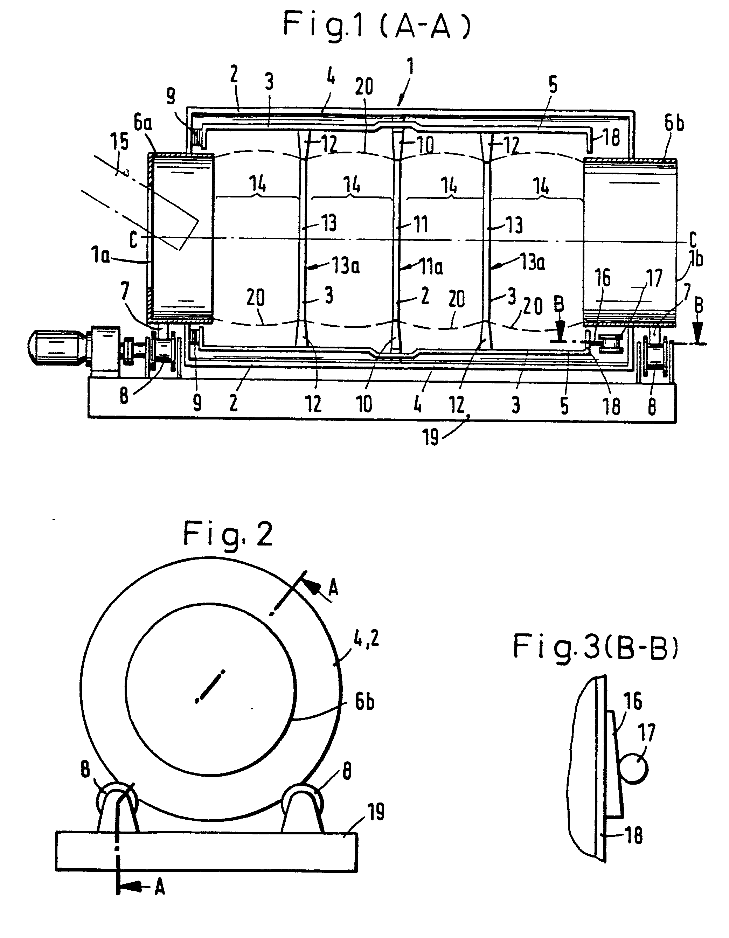

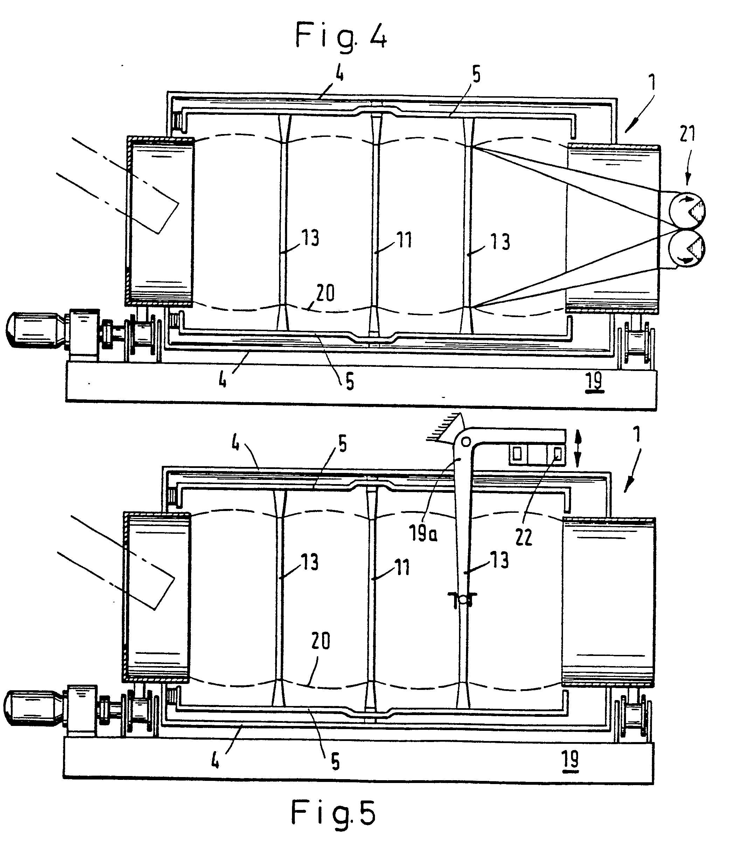

Das Siebgut wird durch eine Aufgabevorrichtung 15 vom Aufgabeende 1a her in Siebtrommel eingebracht, wird sowohl durch die Schwingungen und alternativ zusätzlich durch die Neigung der Siebtrommel zum Austragsende im unteren Bereich der Siebtrommel bewegt, und die nicht durch die Sieböffnungen hindurchgetretenen Siebgutbestandteile mit großem Durchmesser werden am Austragsende abgegeben. Die zweiten Teile 3 der Siebtrommel, insbesondere die zweiten Längsträger 5, werden im Ausführungsbeispiel nach den Figuren 1 bis 3 durch Hocken 16 achsparallel in Schwingungen versetzt, die an Rollen 17 der Grundkonstruktion 19 entlanglaufen. Die Nocken 16 sind an einem Kranz 18 befestigt, der die zweiten Längsträger 5 trägt und der als Teil der Siebtrommel umläuft. Alternativ können die zweiten Teile 3 des sich drehenden und schwingenden Bewegungssystem durch einen Unwuchtmotor 21 (Fig. 4) oder durch einen Elektromagneten 22 in Schwingungen versetzt werden. Ferner kann, wie in Fig. 5 dargestellt, ein Winkelhebel 19a außen schwingend angetrieben sein und Über Gleitstücke oder Rollen die sich drehenden Ringe 13 schwingend beaufschlagen.

Während in allen Ausführungsbeispiel die ringförmigen Siebzonen 14 des Siebbelages bzw. der Siebtrommel zylindrisch sind, können diese auch kegelstumpfförmig sein.

## Patentansprüche

1. Siebmaschine mit einer Siebtrommel (1), die sich um ihre Achse (C - C) dreht und ein Sieb (20) aus elastischem Material aufweist, das abwechselnd gespannt und entspannt wird, dadurch gekennzeichnet, daß die Siebtrommel (1) zwei oder mehr zylindrische oder kegelstumpfförmige Siebzonen (14) aufweist, deren Länge zum abwechselnden Spannen und Entspannen des Siebbelages (20) in Achs- bzw. Förderrichtung schwingend veränderbar ist, daß zwischen zwei Siebzonen (14) ringförmige Befestigungsbereiche (11a, 13a) für den Siebbelag vorgesehen sind und die Befestigungsbereiche abwechselnd an nur drehenden ersten Teilen (2) der Siebtrommel (1) und an drehenden und gleichzeitig in Achsrichtung schwingenden zweiten Teilen (3) der Siebtrommel befestigt sind, und daß die Befestigungsbereiche (11a, 13a) koaxiale Ringe (11, 13) aufweisen, von denen die sich nur drehenden ersten Ringe (11) an der Trommelaußenseite über achsparallele erste Längsteile (4) und die sich drehenden und schwingenden zweiten Ringe (13) an der Trommelaußenseite über achsparallele zweite Längsteile (5) miteinander verbunden sind.

2. Siebmaschine nach Anspruch 1, dadurch gekennzeichnet, daß die Schwingungen lineare kreisförmig oder elliptisch sind.

3. Siebmaschine nach Anspruch 1 oder 2, dadurch gekennzeichnet, daß die an der Tormmelaußenseite angeordneten zweiten Teile (3) der Siebtrommel (1) über Schwingungen aufnehmende Lager (9) an den esten Teilen (2) befestigt sind.

4. Siebmaschine nach einem der Ansprüche 1 bis 3, dadurch gekennzeichnet, daß die ersten Teile (2) der Siebtrommel (1) zwei Laufringe (7) oder Zahnkränze aufweisen, die von unteren Tragrollen (8) gestützt und angetrieben werden.

5. Siebmaschine nach einem der Ansprüche 1 bis 4, dadurch gekennzeichnet, daß die zweiten Teile (3) der Siebtrommel (1) in axialer Richtung durch Nockenbahnen (16, 18), Unwucht- (21), Exzenterantriebe und/oder elektromagnetisch (22) schwingend angetrieben sind

6. Siebmaschine nach einem der Ansprüche 1 bis 5, dadurch gekennzeichnet, daß die zweiten Teile (3) der Siebtrommel (1) am Trommelanfang, am Trommelende oder in der Trommelmitte angetrieben sind.

7. Siebmaschine nach einem der Ansprüche 1 bis 6, dadurch gekennzeichnet, daß die ersten Teile (2) von einem ersten Trommelkorb und die zweiten Teile (3) von einem zweiten Trommelkorb gebildet sind.

## Claims

1. Screening machine with a screening drum (1), which rotates about its axis (C - C) and which has a screen (20) of resilient material, which is alternately stretched and relaxed, <u>characterized in that</u> the screening drum (1) has two or more cylindrical or frustoconical screening zones (14) the length of which is variable by vibration in the direction of the axis, that is to say in the direction of conveyance, for alternate stretching and relaxation of the screen lining (10), in that annular fixing regions (11a, 13a) for the screen lining are provided between two screening zones (14), and the fixing regions are alternately fixed to first parts (2) of the screening drum (1) which simply rotate, and to second parts (3) of the screening drum which rotate and simultaneously vibrate in the axial direction, and in that the fixing regions (11a, 13a) have coaxial rings (11, 13) of which the first rings (11) which simply rotate are connected together at the outside of the drum via first longitudinal parts (4) parallel to the axis and the second rings (13) which rotate and vibrate are connected together at the outside of the drum via second longitudinal parts (5) parallel to the axis.

2. Screening machine according to Claim 1, <u>characterized in that</u> the vibrations are linear, circular or elliptical.

3. Screening machine according to Claim 1 or 2, <u>characterized in that</u> the second parts (3) of the screening drum (1), arranged on the outside of the drum, are fixed to the first parts (2) via bearings (9) which take up vibrations.

4. Screening machine according to one of Claims 1 to 3, <u>characterized in that</u> the first parts (2) of the screening drum (1) have two bearing races or toothed rings, which are supported and driven by lower supporting rollers (8).

5. Screening machine according to one of Claims 1 to 4, <u>characterized in that</u> the second parts (3) of the screening drum (1) are driven with a vibrating motion in the axial direction by cam tracks (16, 18), by out-of-balance eccentric drives (21), and/or by electromagnetic means (22).

6. Screening machine according to one of Claims 1 to 5, <u>characterized in that</u> the second parts (3) of the screening drum (1) are driven at the start of the drum, at the end of the drum, or in the middle of the drum.

7. Screening machine according to one of Claims 1 to 6, <u>characterized in that</u> the first parts (2) are constituted by a first drum cage and the second parts (3) by a second drum cage.

**Revendications**

1. Machine de criblage à tambour avec un tabour de criblage (1) qui tourne autour de son axe (C - C) et qui présente un crible (20) en matériau élastique qui est alternativement tendu et détendu, caractérisé par le fait que le tambour de criblage (1) présente deux ou plusieurs zones de criblage (14) cylindriques ou tronconiques dont la longueur peut être modfiée vibratoirement en direction axiale ou d'alimentation pour tendre et détendre alternativement le panneau de criblage (20), que des zones de fixation annulaires (11 a, 13 a) pour le panneau de criblage sont présvues entre deux zones de criblage (14) et que les zones de fixation sont fixées alternativement à des premières parties (2) du tambour de criblage (1) seulement pivotantes et à des secondes parties (3) du tambour de criblage pivotantes et simultanément vibrantes en direction axiale et que les zones de fixation (11 a, 13 a) présentent des bagues coxiales (11, 13 ) parmi lesquelles les premières bagues (11) seulement pivotantes sont reliées entre elles sur la face extérieure du tambour par des premières pièces longitudinales (4) à axes parallèles et les secondes bagues (13) pivotantes et vibrantes sont reliées entre elles sur la face extérieure du tambour par des secondes pièces longitudnnales (5) à axes parallèles.

2. Machine de criblage selon la revendication 1, caractérisée par le fait que les vibrations sont linéaires, circulaires ou elliptiques.

3. Machine de criblage selon la revendication 1 ou 2, caractérisée par le fait que les secondes pièces (3) du tambour de criblage disposées sur la face extérieure du tambour (1) sont fixées aux premières pièces (2) par l'intermédiaire de paliers (9) absorbant les vibrations.

4. Machine de criblage selon l'une des revendications 1 à 3, caractérisée par le fait que les premières pièces (2) du tambour de criblage (1) présentent deux bagues de roulement (7) ou anneaus dentés qui sont soutenus et entrainés par des rouleaux porteurs inférieurs (8).

5. Machine de criblage selon l'une des revendications 1 à 4, caractérisée par le fait que les secondes pièces (3) du tambour de criblage (1) sont entraînées vibratoirement en direction axiale par des chemins de cames (16, 18), des entraînements à balourd (21), à excentrique et/ou électromagnétiquement (22).

6. Machine de criblage selon l'une des revendications 1 à 5, caractérisée par le fait que les secondes pièces (3) du tambour de criblage (1) sont entraînées au début du tambour, à la fin du tambour ou au milieu du tambour.

7. Machine de criblage selon l'une dos revendications 1 à 6, caractérisée par le fait que les premières pièces (2) sont formées par une première cage de tambour et les secondes pièces (3) par une seconde cage de tambour.

0 158 036

Fig.1 (A-A)

Fig. 2

Fig.3(B-B)

# Fig. 4

# Fig. 5